# EUROPÄISCHE PATENTANMELDUNG

(11) **EP 2 894 362 A2**
(43) Veröffentlichungstag der Anmeldung: **15.07.2015**
(21) Anmeldenummer: 14197170.5
(22) Anmeldetag: 10.12.2014
(51) Int. Cl.: F16D 13/04, F16D 13/54

(54) **Reibungskupplung**

(30) Priorität: 14.01.2014 DE 102014200527
(71) Anmelder: Schaeffler Technologies AG & Co. KG, 91074 Herzogenaurach (DE)
(72) Erfinder: Finkenzeller, Marc, 77723 Gengenbach (DE)

(57) **Zusammenfassung**

Nasse Lamellenkupplung, mit mindestens einer Getriebeeingangswelle, einem mit der Getriebeeingangswelle koppelbaren Ausgangsteil, insbesondere Ausgangslamellenträger, zum Ausleiten eines Drehmoments, mindestens einem zwischen dem Eingangsteil und dem Ausgangsteil vorgesehenen verschleißbehafteten Reibbelag, einer als Blattfeder ausgestalteten mit dem Kupplungsteil und dem Eingangsteil befestigten Rückstellfeder (28) zur Positionierung des Eingangsteils (14) relativ zum Ausgangsteil (22) in eine definierten Ausgangslage, wobei zumindest ein Teil des von der Reibungskupplung (10) übertragenen Drehmoments über die Rückstellfeder übertragbar ist, wobei die Rückstellfeder zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung schräg verläuft, einem Betätigungselement zum Verlagern des Eingangsteils relativ zum Ausgangsteil aus der Ausgangslage heraus und einer parallel zur Rückstellfeder geschalteten mit dem Kupplungsteil und dem Eingangsteil befestigten Kompensationsfeder, wobei die Steigung c_{K} der Federkennlinie der Kompensationsfeder zumindest in einem Teilbereich der axialen Relativlage des Eingangsteils zum Kupplungsteil ein anderes Vorzeichen als die Steigung c_{R} der Federkennlinie der Rückstellfeder aufweist. Durch die Verwendung der schräg zur Radialebene tangential verlaufenden Rückstellfeder auch zur Drehmomentübertragung kann ein verschleißbedingtes selbstverstärkendes Schließen der Reibungskupplung erreicht werden, wobei die Kompensationsfeder (30) ein Ansteigen der im Verschleiß der Reibbeläge erforderlichen Betätigungskraft zum Verlagern des Eingangsteils relativ zum Ausgangsteil aus der Aufgangslage heraus zumindest reduzieren kann, so dass ein sicheres Betätigen der Reibungskupplung mit geringem konstruktivem Aufwand und geringen Kräften ermöglicht ist.

## Beschreibung

Die Erfindung betrifft eine Reibungskupplung, insbesondere nasse Lamellenkupplung, mit deren Hilfe eine Antriebswelle eines Kraftfahrzeugmotors mit mindestens einer Getriebeeingangswelle eines Kraftfahrzeuggetriebes gekuppelt werden kann.

Aus DE 10 2010 048 827 A1 ist eine nasse Lamellenkupplung zum Kuppeln einer Antriebswelle eines Kraftfahrzeugmotors mit einer Getriebeeingangswelle eines Kraftfahrzeuggetriebes bekannt, bei der eine Vorkupplung mit einem Rampenmechanismus vorgesehen ist, um eine erhöhte Anpresskraft im geschlossenen Zustand der Reibungskupplung zu erreichen.

Es besteht ein ständiges Bedürfnis mit geringem konstruktivem Aufwand eine Reibungskupplung sicher und mit möglichst geringen Kräften betätigen zu können.

Es ist die Aufgabe der Erfindung Maßnahmen aufzuzeigen, die ein sicheres Betätigen einer Reibungskupplung mit geringem konstruktivem Aufwand und geringen Kräften ermöglichen.

Die Lösung der Aufgabe erfolgt erfindungsgemäß durch eine Reibungskupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Reibungskupplung, insbesondere nasse Lamellenkupplung, zum Kuppeln einer Antriebswelle eines Kraftfahrzeugmotors mit mindestens einer Getriebeeingangswelle, vorgesehen mit einem mit der Antriebswelle koppelbaren Kupplungsteil zum Einleiten eines Drehmoments, einem relativ axial verlagerbar mit dem Kupplungsteil verbundenen Eingangsteil, insbesondere Eingangslamellenträger, zur Übertragung des über das Kupplungsteil eingeleiteten Drehmoments, einem mit der Getriebeeingangswelle koppelbaren Ausgangsteil, insbesondere Ausgangslamellenträger, zum Ausleiten eines Drehmoments, mindestens einem zwischen dem Eingangsteil und dem Ausgangsteil vorgesehenen verschleißbehafteten Reibbelag zum reibschlüssigen Übertragen eines Drehmoments zwischen dem Eingangsteil und dem Ausgangsteil, einer als Blattfeder ausgestalteten mit dem Kupplungsteil und dem Eingangsteil befestigten Rückstellfeder zur Positionierung des Eingangsteils relativ zum Ausgangsteil in eine definierten Ausgangslage, wobei zumindest ein Teil des von der Reibungskupplung übertragenen Drehmoments über die Rückstellfeder übertragbar ist, wobei die Rückstellfeder zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung schräg verläuft, einem Betätigungselement zum Verlagern des Eingangsteils relativ zum Ausgangsteil aus der Ausgangslage heraus und einer parallel zur Rückstellfeder geschalteten mit dem Kupplungsteil und dem Eingangsteil befestigten Kompensationsfeder, wobei die Steigung c_{K} der Federkennlinie der Kompensationsfeder zumindest in einem Teilbereich der axialen Relativlage des Eingangsteils zum Kupplungsteil ein anderes Vorzeichen als die Steigung c_{R} der Federkennlinie der Rückstellfeder aufweist.

Die als Blattfeder ausgestaltete Rückstellfeder wird nicht nur zum Anfahren einer definierten Relativlage des Eingangsteils zum Ausgangsteil in der Ausgangslage sondern auch zum Übertragen zumindest eines Teils des in die Reibungskupplung eingeleiteten Drehmoments, vorzugsweise des gesamten in die Reibungskupplung eingeleiteten Drehmoments, verwendet. Hierbei wird die Erkenntnis ausgenutzt, dass sich über den Verschleißbereich der Reibbeläge der Hubweg des Ausgangsteils relativ zum Eingangsteil vergrößert und sich dadurch der Anstellwinkel der Rückstellfeder zur Radialebene verändert. Durch den sich vergrößernden oder verkleinernden Anstellwinkel ändern sich in der Art eines schräg betätigten Kniehebels die Kraftverhältnisse an der Rückstellfeder, so dass sich der in Längsrichtung der Rückstellfeder verlaufende Kraftanteil verändert. Entsprechend ändert sich an dem in Kraftflussrichtung ausgangsseitigen Ende der Rückstellfeder der in axialer Richtung der Reibungskupplung weisende Kraftanteil, so dass sich in Abhängigkeit des Hubwegs, der mit dem Verschleißzustand der Reibbeläge korrespondiert, von der Rückstellfeder eine entsprechende sich ändernde Axialkraft aufgeprägt werden kann, die je nach Anwendungsfall mit der über das Betätigungselement eingeleiteten Betätigungskraft zur Anpresskraft addiert oder subtrahiert wird, um im geschlossenen Zustand der Reibungskupplung eine verschleißbedingt nachlassende Anpresskraft zumindest teilweise auszugleichen oder ein Nachlassen des von der Rückstellfeder aufgebrachten Anteils der Anpresskraft in einem geringeren Ausmaß zu erreichen. Dadurch ist es möglich, dass im geschlossenen Zustand der Reibungskupplung bei verschlissenen Reibbelägen die an dem Reibbelag wirkende von der Rückstellfeder und der Kompensationsfeder aufgebrachten Anpresskraft nicht absinkt sondern sich sogar erhöhen kann, so dass sogar ein sich im Verschleiß etwas reduzierender Reibwert kompensiert werden kann. Dadurch kann auch bei verschlissenen Reibbelägen ein sicheres Schließen der Reibungskupplung gewährleistet werden. Hierzu kann die sowieso vorgesehene Rückstellfeder genutzt werden, ohne hierzu weitere Kraftübersetzungseinrichtungen, wie beispielsweise Rampensysteme, vorzusehen, so dass ein einfacher konstruktiver Aufbau der Reibungskupplung mit wenigen Bauteilkomponenten erreicht werden kann. Durch die Verwendung der schräg zur Radialebene tangential verlaufenden Rückstellfeder auch zur Drehmomentübertragung kann eine im Verschleiß der Reibbeläge nachlassende Anpresskraft durch eine Änderung der Kraftrichtung des über die Rückstellfeder eingeleiteten Drehmoments zumindest teilweise kompensiert werden, so dass ein sicheres Schließen einer Reibungskupplung mit geringem konstruktivem Aufwand ermöglicht ist.

Durch die unterschiedlichen Vorzeichen der Federkennlinie der Rückstellfeder und der Kompensationsfeder kann ein progressiver Verlauf der Federkennlinie der Rückstellfeder durch einen degressiven Verlauf der Federkennlinie der Kompensationsfeder oder ein degressiver Verlauf der Federkennlinie der Rückstellfeder durch einen progressiven Verlauf der Federkennlinie der Kompensationsfeder zumindest teilweise ausgeglichen werden, so dass eine durch die Federkraft der Rückstellfeder und der Federkraft der Kompensationsfeder zusammengesetzte resultierende Kraft sich in einem geringen Ausmaß ändert als die jeweilige Federkraft der Rückstellfeder und der Kompensationsfeder. Die resultierende Kraft bestimmt zudem die Anpresskraft zwischen dem Eingangsteil und dem Ausgangsteil in der geschlossenen Stellung der Reibungskupplung sowie eine erforderliche Betätigungskraft, um das Eingangsteil relativ zum Ausgangsteil aus der Ausgangslage, insbesondere in die geöffnete oder geschlossene Stellung der Reibungskupplung, heraus zu bewegen. Die Kraftverhältnisse zum Öffnen und Schließen der Reibungskupplung können sich dadurch zumindest in einem geringeren Ausmaß verschleißbedingt verändern. Eine erforderliche Maximalkraft eines Aktors, um eine ausreichende Betätigungskraft zum Verlagern des Eingangsteils relativ zum Ausgangsteil aus der Aufgangslage heraus kann dadurch verringert werden, wodurch er Aktor kleiner dimensioniert werden kann. Durch die Verwendung der schräg zur Radialebene tangential verlaufenden Rückstellfeder auch zur Drehmomentübertragung kann ein verschleißbedingtes selbstverstärkendes Schließen der Reibungskupplung erreicht werden, wobei die Kompensationsfeder ein Ansteigen der im Verschleiß der Reibbeläge erforderlichen Betätigungskraft zum Verlagern des Eingangsteils relativ zum Ausgangsteil aus der Aufgangslage heraus zumindest reduzieren kann, so dass ein sicheres Betätigen der Reibungskupplung mit geringem konstruktivem Aufwand und geringen Kräften ermöglicht ist.

Die Reibungskupplung ist insbesondere als Lamellenkupplung mit mehreren hintereinander vorgesehenen Reibpaarungen zwischen dem Eingangsteil und dem Ausgangsteil ausgestaltet. Vorzugsweise kann mit Hilfe eines Kühlmittels, insbesondere Öl, Reibungswärme aus der Reibungskupplung abgeführt werden, so dass die Reibungskupplung insbesondere als nasse Lamellenkupplung ausgestaltet sein kann. Das Eingangsteil und/oder das Ausgangsteil können einen Lamellenträger aufweisen, an dem in axialer Richtung verschiebbare Lamellen geführt sind. Die jeweilige Lamelle kann mit Reibbelägen versehen sein oder als Stahllamelle ausgeführt sein. Die Reibungskupplung kann in der Ausgangslage, wenn über das Betätigungselement keine Betätigungskraft eingeleitet wird, geöffnet ("normally open) oder geschlossen ("normally closed") sein. Wenn die Rückstellfeder zur Drehmomentübertragung auf Druck belastet wird, kann die als Blattfeder ausgestaltete Rückstellfeder bis zu einer unterhalb einer Knickkraft liegenden und in Längsrichtung der Blattfeder verlaufenden Kraft auf Biegung beansprucht werden. Insbesondere sind mehrere Rückstellfedern vorgesehen, die insbesondere in Umfangsrichtung vorzugsweise auf einem gemeinsamen Nennradius gleichmäßig verteilt sind, so dass sich die an der einzelnen Rückstellfeder angreifenden Kräfte reduzieren können. Die Rückstellfeder verläuft insbesondere im Wesentlichen tangential und kann durch ihren Anstellwinkel relativ zur Radialebene eine axiale Strecke überbrücken. Es ist auch möglich, dass die Rückstellfeder mit einem Anteil in radialer Richtung verläuft, wobei insbesondere der Anteil der Längserstreckung der Rückstellfeder in tangentialer Richtung deutlich größer als in radialer Richtung ist. Die Rückstellfeder weist insbesondere mehrere übereinander angeordnete Federlagen auf, die insbesondere jeweils aus einem Stahlblech hergestellt sind. Mehrere Federlagen können beispielsweise miteinander vernietet sein. Das Betätigungselement kann als Hebelelement, insbesondere eine um einen in Umfangsrichtung verlaufenden Schwenkpunkt verschwenkbare, vorzugsweise als Tellerfeder ausgestaltete, Hebelfeder ausgestaltet sein, so dass über den Hebeleffekt eine Übersetzung einer an dem Betätigungselement angreifenden Betätigungskraft erreicht werden kann. Das Betätigungselement kann auch als im Wesentlichen rein axial verschobener Betätigungstopf ausgestaltet sein, der abgesehen von einer eigenen elastischen Verformung im Wesentlichen keine Kraftübersetzung für die an dem Betätigungselement angreifende Betätigungskraft bereitstellt.

Insbesondere weist die Steigung c_{K} der Federkennlinie der Kompensationsfeder zwischen einer der geschlossenen Stellung der Reibungskupplung bei unverschlissenen Reibbelägen entsprechenden axialen Relativlage des Eingangsteils zum Kupplungsteil und einer der geöffneten Stellung der Reibungskupplung entsprechenden axialen Relativlage des Eingangsteils zum Kupplungsteil ein anderes Vorzeichen als die Steigung c_{R} der Federkennlinie der Rückstellfeder auf. Dadurch kann die erforderliche Betätigungskraft über den Hubweg des Eingangsteils relativ zum Ausgangsteil zumindest bei unverschlissenen Reibbelägen gering gehalten werden.

Vorzugsweise weist die Steigung c_{K} der Federkennlinie der Kompensationsfeder zwischen einer der geschlossenen Stellung der Reibungskupplung bei verschlissenen Reibbelägen entsprechenden axialen Relativlage des Eingangsteils zum Kupplungsteil und einer der geöffneten Stellung der Reibungskupplung entsprechenden axialen Relativlage des Eingangsteils zum Kupplungsteil ein anderes Vorzeichen als die Steigung c_{R} der Federkennlinie der Rückstellfeder aufweist. Dadurch kann die erforderliche Betätigungskraft über den Hubweg des Eingangsteils relativ zum Ausgangsteil im Wesentlichen über die gesamte Lebensdauer der Reibbeläge gering gehalten werden.

Besonders bevorzugt stellt die Rückstellfeder im geschlossenen Zustand der Reibungskupplung im verschlissenen Zustand des mindestens einen Reibbelags eine höhere Federkraft als im unverschlissenen Zustand des mindestens einen Reibbelags bereit. Die Rückstellfeder kann dadurch im Verschleiß der Reibbeläge eine sich erhöhende Federkraft bereitstellen, so dass die Rückstellfeder eine Selbstverstärkung der Anpresskraft in der geschlossenen Stellung der Reibungskupplung bei verschleißenden Reibbelägen bereit stellen kann. Durch diese Selbstverstärkung kann ein sicheres Schließen der Reibungskupplung auch bei verschlissenen Reibbelägen sichergestellt werden. Eine Beeinträchtigung oder sogar Beendigung der Drehmomentübertragungsfähigkeit der Reibungskupplung durch Verschleißeffekte der Reibbeläge kann dadurch sicher vermieden werden. Ein zu starkes Anwachsen der zwischen dem Eingangsteil und dem Ausgangsteil angreifenden Anpresskraft der Rückstellfeder kann durch die Kompensationsfeder vermieden und zumindest teilweise kompensiert werden. Dadurch kann ein sicheres Schließen der Reibungskupplung mit Hilfe der Rückstellfeder auch im Verschleiß der Reibbeläge sichergestellt werden, wobei mit Hilfe der Kompensationsfeder die erforderlichen Betätigungskräfte, um die geschlossene Stellung zu verlassen und das Ausgangsteil von dem Eingangsteil zu lüften, gering gehalten werden können.

Insbesondere stellt die Rückstellfeder bei der Drehmomentübertragung durch den tangentialen Verlauf der Rückstellfeder eine sich über den Verschleißbereich des mindestens einen Reibbelags verändernde Kraftübersetzung in axialer Richtung bereit, wobei die Kraftübersetzung eine Änderung einer sich über den Verschleißbereich des mindestens einen Reibbelags verändernde Rückstellkraft in axialer Richtung in die Ausgangslage ausgleicht oder überkompensiert. Die als Blattfeder ausgestaltete Rückstellfeder kann bei einem sich im Verschleiß der Reibbeläge verändernden Hubweg seinen Anstellwinkel außerhalb der Ausgangslage immer stärker verändern, wodurch sich auch das Übersetzungsverhältnis zwischen dem eingangsseitig an der Rückstellfeder angreifenden Drehmoment und dem ausgangsseitig in axialer Richtung wirkenden Axialkraft ändert. Die sich in Abhängigkeit vom Verschleiß der Reibbeläge ändernde Kraftübersetzung der Rückstellfeder kann derart gewählt und konstruktiv ausgestaltet sein, dass ein verschleißbedingtes Nachlassen der Anpresskraft an den Reibbelägen im geschlossenen Zustand der Reibungskupplung zumindest in einem geringeren Ausmaß auftritt. Hierbei kann insbesondere auch ein gegebenenfalls stattfindendes Nachlassen der an dem Betätigungselement angreifenden Betätigungskraft bei ansteigendem Hubweg des Betätigungselements kompensiert werden.

Vorzugsweise ist eine von der Rückstellfeder und der Kompensationsfeder gebildete auf das Eingangsteil und/oder auf das Kupplungsteil wirkende resultierende Kraft zumindest in einem Teilbereich der axialen Relativlage des Eingangsteils zum Kupplungsteil, insbesondere zwischen einer der geschlossenen Stellung der Reibungskupplung bei verschlissenen oder unverschlissenen Reibbelägen entsprechenden axialen Relativlage des Eingangsteils zum Kupplungsteil und einer der geöffneten Stellung der Reibungskupplung entsprechenden axialen Relativlage des Eingangsteils zum Kupplungsteil, im Wesentlichen konstant. Dadurch kann die erforderliche Betätigungskraft über den Hubweg des Eingangsteils relativ zum Ausgangsteil zumindest in einem Teilbereich, vorzugsweise im Wesentlichen über die gesamte Lebensdauer der Reibbeläge, gering gehalten werden. Insbesondere kann die resultierende Kraft zwischen der geöffneten Stellung und der geschlossenen Stellung der Reibungskupplung um einen Differenzbetrag ΔF von einem über den Hubweg gemittelten Mittelwert F abweichen, wobei insbesondere 0,00 ≤ ΔF/F ≤ 0,20, vorzugsweise 0,01 ≤ ΔF/F ≤ 0,10, weiter bevorzugt 0,02 ≤ ΔF/F ≤ 0,15 und besonders bevorzugt 0,03 ≤ ΔF/F ≤ 0,04 gilt.

Besonders bevorzugt ist die Kompensationsfeder über ein Axiallager, insbesondere ein Axialgleitlager, an dem Eingangsteil und/oder an dem Kupplungsteil abgestützt. Bei einer Änderung des Anstellwinkels der als Blattfeder ausgestalteten Rückstellfeder kann ein Versatz des Eingangsteils zum Kupplungsteil in Umfangsrichtung auftreten. Durch das Axiallager kann ein Klemmen des Eingangsteils mit dem Kupplungsteil durch eine von der Kompensationsfeder aufgebrachten Normalkraft vermieden werden. Ein reibschlüssiges Festhalten des Eingangsteils mit dem Kupplungsteil durch die Kompensationsfeder ist vermieden. Stattdessen kann die Kompensationsfeder in dem Umfang des auftretenden Versatzes des Eingangsteils zum Kupplungsteil in Umfangsrichtung relativ zum Eingangsteil und/oder zum Kupplungsteil verdreht werden.

Insbesondere ist das Eingangsteil zum Kupplungsteil begrenzt verdrehbar. Dadurch kann ein Versatz des Eingangsteils zum Kupplungsteil in Umfangsrichtung bei der Änderung des Anstellwinkels der Rückstellfeder ausgeglichen werden.

Vorzugsweise ist die Reibungskupplung in der Ausgangslage geschlossen. Die Reibungskupplung ist dadurch insbesondere als "normally closed" ausgestaltet. Die Rückstellfeder und die Kompensationsfeder können dadurch leicht mit dem Kupplungsteil oder dem Eingangsteil, befestigt werden. Insbesondere können die Rückstellfeder und die Kompensationsfeder im Wesentlichen in einem äußeren und leicht zugänglichen Bereich der Reibungskupplung vorgesehen sein, wodurch die Montage erleichtert ist. Insbesondere ist der Anstellwinkel der Rückstellfeder im geschlossenen Zustand der Reibungskupplung im verschlissenen Zustand des mindestens einen Reibbelags größer als im unverschlissenen Zustand des mindestens einen Reibbelags, wodurch sich der Anteil der von der Rückstellfeder aufgebrachten Anpresskraft im verschlissenen Zustand in einem geringeren Ausmaß nachlässt.

Die Erfindung betrifft ferner eine Doppelkupplung zum Kuppeln einer Antriebswelle eines Kraftfahrzeugmotors mit einer ersten Getriebeeingangswelle und/oder einer zweiten Getriebeeingangswelle mit einer ersten Reibungskupplung, die wie vorstehend beschrieben aus- und weitergebildet sein kann, zum Kuppeln der Antriebswelle mit der ersten Getriebeeingangswelle und einer zweiten Reibungskupplung, die wie vorstehend beschrieben aus- und weitergebildet sein kann, zum Kuppeln der Antriebswelle mit der zweiten Getriebeeingangswelle. Durch die Verwendung der schräg zur Radialebene tangential verlaufenden Rückstellfeder auch zur Drehmomentübertragung kann ein verschleißbedingtes selbstverstärkendes Schließen der Reibungskupplung erreicht werden, wobei die Kompensationsfeder ein Ansteigen der im Verschleiß der Reibbeläge erforderlichen Betätigungskraft zum Verlagern des Eingangsteils relativ zum Ausgangsteil aus der Aufgangslage heraus zumindest reduzieren kann, so dass ein sicheres Betätigen der Reibungskupplungen der Doppelkupplung mit geringem konstruktivem Aufwand und geringen Kräften ermöglicht ist. Dies führt zu einem besonders kompakten und bauraumsparenden Aufbau der Doppelkupplung.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Prinzipdarstellung einer Reibungskupplung,
Fig. 2: eine schematisches Diagramm der beim Betrieb der Reibungskupplung aus Fig. 1 auftretenden Kräfte und
Fig. 3: eine schematische perspektivische teilgeschnittene Ansicht der Reibungskupplung aus Fig. 1.

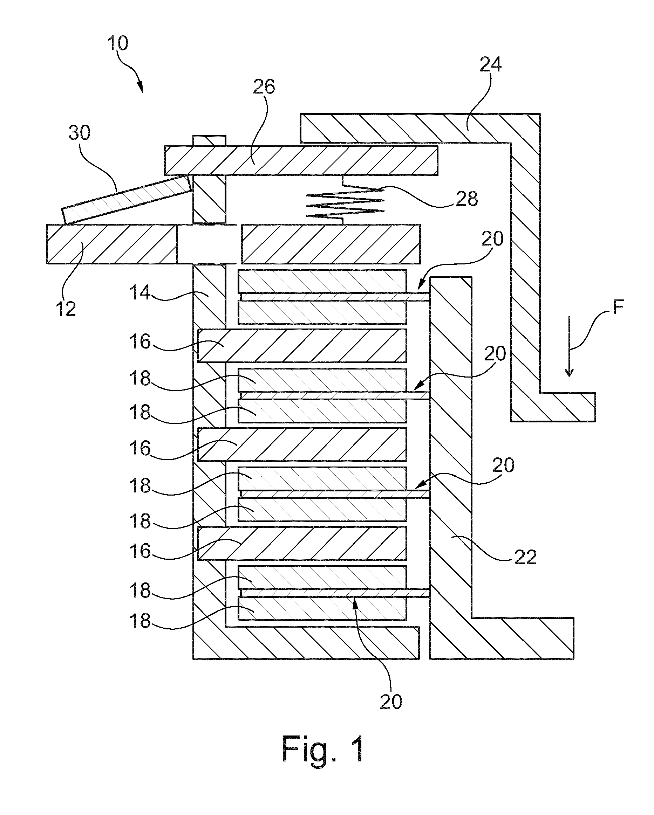

Die in Fig. 1 dargestellte Reibungskupplung 10 weist ein als Kupplungsdeckel ausgestaltetes Kupplungsteil 12 auf, das mitdrehend aber axial feststehend ausgestaltet ist. Mit dem Kupplungsteil 12 ist ein als Lamellenträger ausgestaltetes Eingangsteil 14 gekoppelt, das mit dem Kupplungsteil 12 in axialer Richtung beweglich befestigt ist. Das Eingangsteil 14 weist mehrere in axialer Richtung verschiebbare Stahllamellen 16 auf, zwischen denen beidseitig mit einem verschleißbehafteten Reibbelag 18 versehene Reiblamellen 20 eines als Lamellenträger ausgestalteten Ausgangsteils 22 angeordnet sind. Um im geschlossenen Zustand der Reibungskupplung 10 einen Drehmomentfluss zwischen dem Eingangsteil 14 und dem Ausgangsteil 22 herzustellen, können die Stahllamellen 16 und die Reiblamellen 20 mit Hilfe eines als Betätigungstopf ausgestalteten Betätigungselement 24 verpresst werden. Das Betätigungselement 24 kann hierzu an einem Stützstück 26 des Eingangsteils 14 angreifen, um das Eingangsteil 14 in axialer Richtung relativ zum Ausgangsteil 22 zu verlagern. Mit dem Stützstück 26 und dem Kupplungsteil 12 ist eine als Blattfeder ausgestaltete Rückstellfeder 28 fest verbunden. In dem dargestellten Ausführungsbeispiel ist die Reibungskupplung als "normally closed" ausgestaltet. Die Rückstellfeder 28 kann bei einer fehlenden über das Betätigungselement eingeleiteten Betätigungskraft F das Eingangsteil 14 mit dem Ausgangsteil 22 reibschlüssig verpressen. Zum Öffnen der Reibungskupplung 10 kann eine an dem Betätigungselement 24 angreifende Betätigungskraft F das Eingangsteil 14 von dem Ausgangsteil 22 wegziehen, so dass das Eingangsteil 14 von dem Ausgangsteil 22 lüften kann und ein Reibkontakt zwischen den Stahllamellen 16 und den Reiblamellen 20 aufgehoben wird.

Bei einem auftretenden Verschleiß der Reibbeläge 18 erhöht sich zum Schließen der Reibungskupplung 10 der Hubweg des Eingangsteils 14, wodurch sich die von der Rückstellfeder 28 aufgebrachte Federkraft in der geschlossenen Stellung der Reibungskupplung 10 verändert, beispielsweise verringert. Allerdings wird gleichzeitig ein Teil des über das Kupplungsteil 12 eingeleiteten Drehmoments eines Kraftfahrzeugmotors über die Rückstellfeder 28 an das Stützstück 26 übertragen. Die als Blattfeder ausgestaltete Rückstellfeder 28 wird hierbei auf Druck beansprucht ohne hierbei zu knicken. Durch den im Verschleiß erhöhten Hubweg des Eingangsteils 14 stellt sich bei der Rückstellfeder 28 ein sich gegenüber einer Radialebene erhöhter Anstellwinkel der Längserstreckung der Rückstellfeder 28 ein, wodurch ein erhöhter Kraftanteil des über die Rückstellfeder 28 übertragenen Drehmoments in axialer Richtung zum Verpressen der Reibbeläge 18 im geschlossenen Zustand der Reibungskupplung 10 auftritt. Dadurch kann eine Verringerung der Federkraft der Rückstellfeder 28 im Verschleiß zumindest reduziert werden. Das Eingangsteil 14 ist zum Kupplungsteil 12 begrenzt verdrehbar ausgeführt, um eine Relativdrehung des Eingangsteils 14 relativ zum Kupplungsteil 12 bei einer Änderung des Anstellwinkels der Rückstellfeder 28 über den Hubweg des Eingangsteils 14 zu ermöglichen.

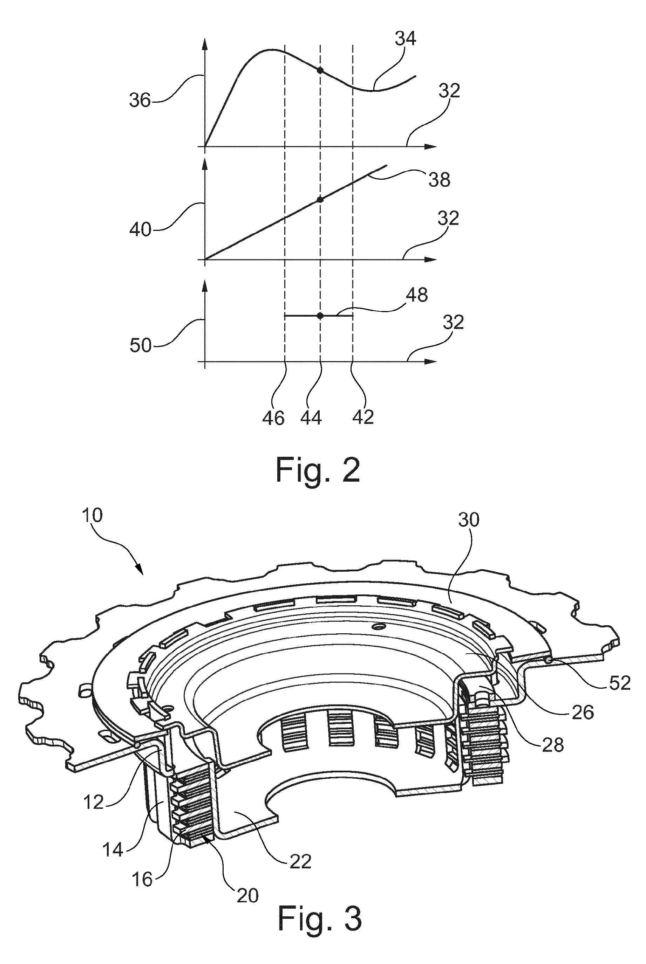

Die Reibungskupplung 10 weist zusätzlich eine als Tellerfeder ausgestaltete Kompensationsfeder 30 auf, die an dem Stützstück 26 des Eingangsteils 14 und dem Kupplungsteil 12 angreift. Die Kompensationsfeder 30 ist dadurch parallel zu Rückstellfeder 28 geschaltet. Die als Tellerfeder ausgestaltete Kompensationsfeder 30 kann aufgrund ihrer Bauart über einen mit dem Federweg korrespondierenden in Richtung der Betätigungskraft F gerichteten Ausrückweg 32 des Betätigungselements 24 eine Kompensationsfederkennlinie 34 einer Kompensationsfederkraft 36 aufweisen, die in einem Teilbereich degressiv verläuft, wie in Fig. 2 dargestellt. Die als Blattfeder ausgestaltete Rückstellfeder 28 kann über den mit dem Federweg korrespondierenden Ausrückweg 32 eine Rückstellfederkennlinie 38 einer Rückstellfederkraft 40 aufweisen, die im Wesentlichen linear progressiv sein kann. Zwischen einer der geöffneten Stellung der Reibungskupplung 10 entsprechenden Öffnungsstellung 42 und einer bei unverschlissenen Reibbelägen 18 entsprechenden Neu-Geschlossenstellung 44, insbesondere zwischen der Öffnungsstellung 42 und einer bei maximal verschlissenen Reibbelägen 18 entsprechenden Verschleiß-Geschlossenstellung 46, kann die Kompensationsfederkennlinie 34 degressiv verlaufen, während die Rückstellfederkennlinie 38 progressiv verläuft oder umgekehrt. In diesem Teilbereich weisen die Steigungen der Kompensationsfederkennlinie 34 und der Rückstellfederkennlinie 38 unterschiedliche Vorzeichen auf. Vorzugsweise verläuft die Kompensationsfederkennlinie 34 in diesem Teilbereich im Wesentlichen linear, so dass es möglich ist eine Änderung der Rückstellfederkraft 40 durch eine entsprechende Änderung der Kompensationsfederkraft 36 auszugleichen, eine Gesamtfederkennlinie 48 einer sich durch die Rückstellfederkraft 40 und der Kompensationsfederkraft 36 ergebenen resultierenden Kraft 50 kann dadurch im wesentlichen konstant sein. Die resultierende Kraft 50 greift an dem Kupplungsteil 12 und dem Stützstück 26 des Eingangsteils 14 an und entspricht damit der auf den Reiblamellen 20 angreifenden Anpresskraft, die von der Betätigungskraft F bei einem Öffnen der Reibungskupplung 10 überwunden werden muss. Hierbei ist es bereits ausreichend, wenn die Betätigungskraft F die im Wesentlichen konstante resultierende Kraft 50 überwinden kann, ohne dass besondere Kraftreserven vorgehalten werden müssen, so dass ein sicheres Betätigen der Reibungskupplung 10 mit geringem konstruktivem Aufwand und einer gering gehaltenen Betätigungskraft F ermöglicht ist.

Wie in Fig. 3 dargestellt, kann die Reibungskupplung 10 einen besonders kompakten Aufbau aufweisen, so dass die Reibungskupplung 10 insbesondere für Motorräder eingesetzt werden kann. Ferner kann die Kompensationsfeder 30 gegebenenfalls begrenzt verdrehbar mit dem Stützstück 26 insbesondere verliersicher verbunden sein. Die Kompensationsfeder 30 kann vorzugsweise über einen an dem Kupplungsteil 12 abgestützten Kippring 52 um einen in Umfangsrichtung linienförmig verlaufenden Schwenkpunkt durch eine Änderung ihrer Konizität verschwenkbar sein.

### Bezugszeichenliste

- 10: Reibungskupplung
- 12: Kupplungsteil
- 14: Eingangsteil
- 16: Stahllamelle
- 18: Reibbelag
- 20: Reiblamelle
- 22: Ausgangsteil
- 24: Betätigungselement
- 26: Stützstück
- 28: Rückstellfeder
- 30: Kompensationsfeder
- 32: Ausrückweg
- 34: Kompensationsfederkennlinie
- 36: Kompensationsfederkraft
- 38: Rückstellfederkennlinie
- 40: Rückstellfederkraft
- 42: Öffnungsstellung
- 44: Neu-Geschlossenstellung
- 46: Verschleiß-Geschlossenstellung
- 48: Gesamtfederkennlinie
- 50: resultierende Kraft
- 52: Kippring

## Patentansprüche

1. Reibungskupplung, insbesondere nasse Lamellenkupplung, zum Kuppeln einer Antriebswelle eines Kraftfahrzeugmotors mit mindestens einer Getriebeeingangswelle, mit einem mit der Antriebswelle koppelbaren Kupplungsteil (12) zum Einleiten eines Drehmoments,
einem relativ axial verlagerbar mit dem Kupplungsteil (12) verbundenen Eingangsteil (14), insbesondere Eingangslamellenträger, zur Übertragung des über das Kupplungsteil (12) eingeleiteten Drehmoments,
einem mit der Getriebeeingangswelle koppelbaren Ausgangsteil (22), insbesondere Ausgangslamellenträger, zum Ausleiten eines Drehmoments,
mindestens einem zwischen dem Eingangsteil (14) und dem Ausgangsteil (22) vorgesehenen verschleißbehafteten Reibbelag (18) zum reibschlüssigen Übertragen eines Drehmoments zwischen dem Eingangsteil (14) und dem Ausgangsteil (22),
einer als Blattfeder ausgestalteten mit dem Kupplungsteil (12) und dem Eingangsteil (14) befestigten Rückstellfeder (28) zur Positionierung des Eingangsteils (14) relativ zum Ausgangsteil (22) in eine definierten Ausgangslage, wobei zumindest ein Teil des von der Reibungskupplung (10) übertragenen Drehmoments über die Rückstellfeder (28) übertragbar ist, wobei die Rückstellfeder (28) zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung (10) schräg verläuft,
einem Betätigungselement (24) zum Verlagern des Eingangsteils (14) relativ zum Ausgangsteil (22) aus der Ausgangslage heraus und
einer parallel zur Rückstellfeder (28) geschalteten mit dem Kupplungsteil (12) und dem Eingangsteil (14) befestigten Kompensationsfeder (30), wobei die Steigung c_{K} der Federkennlinie (34) der Kompensationsfeder (30) zumindest in einem Teilbereich der axialen Relativlage des Eingangsteils (14) zum Kupplungsteil (12) ein anderes Vorzeichen als die Steigung c_{R} der Federkennlinie (38) der Rückstellfeder (28) aufweist.

2. Reibungskupplung nach Anspruch 1 **dadurch gekennzeichnet, dass** die Steigung c_{K} der Federkennlinie (34) der Kompensationsfeder (30) wischen einer der geschlossenen Stellung (44) der Reibungskupplung (10) bei unverschlissenen Reibbelägen (18) entsprechenden axialen Relativlage des Eingangsteils (14) zum Kupplungsteil (12) und einer der geöffneten Stellung (42) der Reibungskupplung (10) entsprechenden axialen Relativlage des Eingangsteils (14) zum Kupplungsteil (12) ein anderes Vorzeichen als die Steigung c_{R} der Federkennlinie (38) der Rückstellfeder (28) aufweist.

3. Reibungskupplung nach Anspruch 1 oder 2 **dadurch gekennzeichnet, dass** die Steigung c_{K} der Federkennlinie (34) der Kompensationsfeder zwischen einer der geschlossenen Stellung (46) der Reibungskupplung (10) bei verschlissenen Reibbelägen entsprechenden axialen Relativlage des Eingangsteils (14) zum Kupplungsteil (12) und einer der geöffneten Stellung (42) der Reibungskupplung (10) entsprechenden axialen Relativlage des Eingangsteils (14) zum Kupplungsteil (12) ein anderes Vorzeichen als die Steigung c_{R} der Federkennlinie (38) der Rückstellfeder (28) aufweist.

4. Reibungskupplung nach einem der Ansprüche 1 bis 3 **dadurch gekennzeichnet, dass** die Rückstellfeder (28) im geschlossenen Zustand der Reibungskupplung (10) im verschlissenen Zustand des mindestens einen Reibbelags (18) eine höhere Federkraft als im unverschlissenen Zustand des mindestens einen Reibbelags (18) bereitstellt.

5. Reibungskupplung nach Anspruch 4 **dadurch gekennzeichnet, dass** die Rückstellfeder (28) bei der Drehmomentübertragung durch den tangentialen Verlauf der Rückstellfeder (28) eine sich über den Verschleißbereich des mindestens einen Reibbelags (18) verändernde Kraftübersetzung in axialer Richtung bereitstellt, wobei die Kraftübersetzung eine Änderung einer sich über den Verschleißbereich des mindestens einen Reibbelags (18) verändernde Rückstellkraft (40) in axialer Richtung in die Ausgangslage ausgleicht oder überkompensiert.

6. Reibungskupplung nach einem der Ansprüche 1 bis 5 **dadurch gekennzeichnet, dass** eine von der Rückstellfeder (28) und der Kompensationsfeder (30) gebildete auf das Eingangsteil (14) und/oder auf das Kupplungsteil (12) wirkende resultierende Kraft (50) zumindest in einem Teilbereich der axialen Relativlage des Eingangsteils (14) um Kupplungsteil (12), insbesondere zwischen einer der geschlossenen Stellung (46, 44) der Reibungskupplung (10) bei verschlissenen oder unverschlissenen Reibbelägen (18) entsprechenden axialen Relativlage des Eingangsteils (14) zum Kupplungsteil (12) und einer der geöffneten Stellung (42) der Reibungskupplung (10) entsprechenden axialen Relativlage des Eingangsteils (14) zum Kupplungsteil (12), im Wesentlichen konstant ist.

7. Reibungskupplung nach einem der Ansprüche 1 bis 5 **dadurch gekennzeichnet, dass** die Kompensationsfeder (30) über ein Axiallager, insbesondere ein Axialgleitlager, an dem Eingangsteil (14) und/oder an dem Kupplungsteil (12) abgestützt ist.

8. Reibungskupplung nach einem der Ansprüche 1 bis 7 **dadurch gekennzeichnet, dass** das Eingangsteil (14) zum Kupplungsteil (12) begrenzt verdrehbar ist.

9. Reibungskupplung nach einem der Ansprüche 1 bis 8 **dadurch gekennzeichnet, dass** die Reibungskupplung (10) in der Ausgangslage geschlossen ist.

10. Doppelkupplung zum Kuppeln einer Antriebswelle eines Kraftfahrzeugmotors mit einer ersten Getriebeeingangswelle und/oder einer zweiten Getriebeeingangswelle mit einer ersten Reibungskupplung (10) nach einem der Ansprüche 1 bis 9 zum Kuppeln der Antriebswelle mit der ersten Getriebeeingangswelle und einer zweiten Reibungskupplung (10) nach einem der Ansprüche 1 bis 9 zum Kuppeln der Antriebswelle mit der zweiten Getriebeeingangswelle.
